# EUROPEAN PATENT APPLICATION

(11) **EP 4 640 504 A1**
(43) Date of publication of application: **29.10.2025**
(21) Application number: 25171700.5
(22) Date of filing: 22.04.2025
(51) Int. Cl.: B60T 7/04, G05G 1/38, G05G 1/44

(54) **BRAKE PEDAL EMULATOR WITH INTEGRATED SENSOR COMPONENTS**

(30) Priority: 22.04.2024 US 202463637133 P; 13.09.2024 US 202463694565 P
(71) Applicant: Ventra Group Co., Halifax NS B3J 2V1 (CA)
(72) Inventor: JARJOURA, Steve A., Springwater, L9X 0S3 (CA); REID, Terry L., Orillia, L3V 1B1 (CA); PRENTICE, Ronald David, Toronto, M9N 3W6 (CA); ABRAMOWICZ, Jack, London, N6B 3R6 (CA); RICHARDS, Brandon, Detroit, 48214 (US)
(74) Representative: Beck Greener LLP

(57) **Abstract**

A pedal assembly, a sensing system, and a method for making the same. The sensing system has a first sensor assembly and a second sensor assembly on each side of the assembly. A first element (inductance sensor) and another element (Hall effect sensor) are spaced apart from respective target and magnet to sense displacement of the pedal arm. The target and magnet are connected and pivotally fixed to the pivotal shaft(s) for pivoting in concert therewith and for allowing relative axial movement between. An essentially constant spacing between the first and second elements (inductance and HE sensors) in the axial direction is maintained. Further, the sensing system provides a redundancy for adjustments in build tolerance and pedal lateral movement during operation/loading.

## Description

The present disclosure is generally related to an actuating assembly for a vehicle, such as a brake pedal.

Actuating assemblies for operating input elements of vehicles are well-known and include assemblies such as brake pedal assemblies and hand lever assemblies. For example, known brake pedal assemblies include a pedal arm having one end that is pivotally mounted to a mounting structure (e.g., a bracket) provided in the vehicle to enable pivotal movement of the pedal arm about an operating pivot axis, for operating push rods that activate functional systems of vehicles. Movement of the pedal arm is often measured using a sensor.

In some existing pedal assemblies, a single sensor assembly is provided to measure the movement or displacement of the pedal arm. However, this configuration may not provide accurate and reliable measurements, as it may be affected by external factors or mechanical limitations. Additionally, the use of a single sensor assembly may not allow for redundancy or fail-safe operation in case of sensor failure.

Other pedal assemblies have attempted to address these issues by incorporating multiple sensor assemblies within a pedal assembly. Pedal assemblies with multiple sensors are known in the art. For example, see U.S. Patent Application Publication No. 20230018082 and WO Publication Nos. 2023210806 and 2023032291, each of which are hereby incorporated by reference in its entirety. However, previous approaches like these are limited with regards to mounting the sensors relative to the pedal parts, which can result in inaccurate measurements and thus braking output.

It is an aspect of this disclosure to provide a pedal assembly that activates a functional system of a vehicle. The pedal assembly includes: a pedal arm with a first end and a second end and configured for movement between a first arm position and a second arm position; a pedal plate provided on the second end of the pedal arm for depression by a foot of a driver; a vehicle mounting bracket; and a pair of pivotal shafts extending laterally from the first end of the pedal arm for pivotally mounting the pedal arm to the vehicle mounting bracket, such that movement of the pedal arm between the first arm position and the second arm position causes pivotal movement of the pair of pivotal shafts about a pivot axis. Also included in the pedal assembly is a sensing system having a first sensor assembly and a second sensor assembly for sensing a displacement of the pedal arm. The first sensor assembly is provided on a first side of the pedal assembly and the second sensor assembly is provided on a second side of the pedal assembly. The first sensor assembly has a first element spaced apart from a second element in an axial direction of the pivot axis. The second element is movable with the pivotal movement of the pair of pivotal shafts as a result of the movement of the pedal arm from the first arm position such that the second element is displaced relative to the first element, and the first sensor assembly is configured to sense the displacement of the pedal arm based on the displacement of the second element relative to the first element. The first sensor assembly includes a first sensor mount with the first element fixedly mounted thereto, and the second element is pivotally connected to the first sensor mount to maintain an essentially constant spacing between the first and second elements in the axial direction. The second sensor assembly has a third element spaced apart from a fourth element in the axial direction of the pivot axis. The fourth element is movable with the pivotal movement of the pair of pivotal shafts as a result of the movement of the pedal arm from the first arm position such that the fourth element is displaced relative to the third element, and the second sensor assembly is configured to sense the displacement of the pedal arm based on the displacement of the fourth element relative to the third element. The second sensor assembly includes a second sensor mount with the third element fixedly mounted thereto, and the fourth element is pivotally connected to the second sensor mount to maintain an essentially constant spacing between the third and fourth elements in the axial direction. Each of the second element and the fourth element is connected to its respective pivotal shaft in an axially movable and pivotally fixed manner such that (a) each of the second and fourth elements pivots in concert with its respective pivotal shaft and (b) relative axial movement is permitted between each of the second and fourth elements and its respective pivotal shaft.

In embodiments, the functional system of the vehicle is a brake system. Preferably, the pedal arm is a brake pedal arm for operating a brake element of the vehicle.

In embodiments, the pair of pivotal shafts are outer ends of a singular pivot rod or tube.

In embodiments, the first element is an inductance sensor, the second element is an inductance target, the third element is a Hall effect sensor, and the fourth element is a magnet.

In embodiments, the first sensor assembly comprises a first carrier bushing and the second sensor assembly comprises a second carrier bushing, said second element being mounted to the first carrier bushing and the fourth element being mounted to the second carrier bushing, and wherein each of said first and second carrier bushings are configured for alignment with and mounting to the pivotal shafts so as to provide said pivoting in concert with the respective pivotal shaft. Preferably, each of the first sensor mount and the second sensor mount include a receptacle therein for receiving, respectively, at least a portion of the first carrier bushing and the second carrier bushing for pivotal connection of the second element and the fourth element thereto. Preferably, each receptacle includes a locking tab, wherein each of the first carrier bushing and the second carrier bushing include a receiving portion or indentation thereon, and wherein, upon assembly of the first carrier bushing and the second carrier bushing to their respective receptacles in the first sensor mount and the second sensor mount, the locking tabs are configured for insertion into the receiving portions or indentations to axially secure the first carrier bushing and the second carrier bushing to the first sensor mount and the second sensor mount, respectively.

In embodiments, each of the first carrier bushing and the second carrier bushing comprise a mounting peg extending therefrom, the peg being configured for insertion into an opening or a through-hole of the pivotal shafts for mounting thereto.

In embodiments, each of the first sensor mount and the second sensor mount include a printed circuit board therein, said first element and third element being fixedly mounted to the respective printed circuit boards.

In embodiments, the pedal arm comprises an elongated lever structure.

Another aspect provides a sensing system for sensing displacement of a pedal arm for a functional system of a vehicle, the pedal arm being configured for movement between a first arm position and a second arm position and associated with pivotal shafts for pivotal movement about a pivot axis. The sensing system includes: a first sensor assembly and a second sensor assembly for sensing a displacement of the pedal arm. The first sensor assembly is configured for mounting relative to a first side of the pedal arm, and the second sensor assembly is configured for mounting relative to a second side of the pedal arm. The first sensor assembly has a first element spaced apart from a second element in an axial direction of the pivot axis. The second element is configured to be connected to one of the pivotal shafts for pivotal movement therewith as a result of the movement of the pedal arm from the first arm position such that the second element is displaced relative to the first element, and the first sensor assembly is configured to sense the displacement of the pedal arm based on the displacement of the second element relative to the first element. The first sensor assembly includes a first sensor mount with the first element fixedly mounted thereto, and the second element is pivotally connected to the first sensor mount. The second element is configured to be mounted to one of the pivotal shafts in an axially movable and pivotally fixed manner to pivot in concert with the one of the pivotal shafts and permit relative axial movement thereof to maintain an essentially constant spacing between the first and second elements in the axial direction. The second sensor assembly has a third element spaced apart from a fourth element in the axial direction of the pivot axis. The fourth element is configured to be connected to the other of the pivotal shafts for pivotal movement therewith as a result of the movement of the pedal arm from the first arm position such that the fourth element is displaced relative to the third element, and the second sensor assembly is configured to sense the displacement of the pedal arm based on the displacement of the fourth element relative to the third element. The second sensor assembly includes a second sensor mount with the third element fixedly mounted thereto, the fourth element being pivotally connected to the second sensor mount, and the fourth element being configured to be mounted to said other of the pivotal shafts in an axially movable and pivotally fixed manner to pivot in concert with the other of the pivotal shafts and permit axial movement thereof to maintain an essentially constant spacing between the third and fourth elements in the axial direction.

In embodiments, the first element is an inductance sensor, the second element is an inductance target, the third element is a Hall effect sensor, and the fourth element is a magnet.

In embodiments, the first sensor assembly comprises a first carrier bushing and the second sensor assembly comprises a second carrier bushing, said second element being mounted to the first carrier bushing and the fourth element being mounted to the second carrier bushing, and wherein each of said first and second carrier bushings are configured for alignment with and mounting to the pivotal shafts so as to provide said pivoting in concert with the pivotal shafts. Preferably, each of the first sensor mount and the second sensor mount include a receptacle therein for receiving, respectively, at least a portion of the first carrier bushing and the second carrier bushing for pivotal connection of the second element and the fourth element thereto. Preferably, each receptacle includes a locking tab, wherein each of the first carrier bushing and the second carrier bushing include a receiving portion or indentation thereon, and wherein, upon assembly of the first carrier bushing and the second carrier bushing to their respective receptacles in the first sensor mount and the second sensor mount, the locking tabs are configured for insertion into the receiving portions or indentations to axially secure the first carrier bushing and the second carrier bushing to the first sensor mount and the second sensor mount, respectively.

In embodiments, each of the first carrier bushing and the second carrier bushing comprise a mounting peg extending therefrom, the mounting peg being configured for insertion into an opening or a through-hole of the pivotal shafts for mounting thereto.

In embodiments, each of the first sensor mount and the second sensor mount include a printed circuit board therein, said first element and third element being fixedly mounted to the respective printed circuit boards.

Yet another aspect provides a vehicle comprising the pedal assembly noted previously above and a controller for implementing braking force and configured to receive readings from said first sensor assembly and said second sensor assembly.

Still yet another aspect provides a method of making the pedal assembly, that activates a functional system of a vehicle, the method including: providing the first sensor assembly and the second sensor assembly. The providing includes: assembling a printed circuit board in the first sensor mount and the second sensor mount for each of the first sensor assembly and the second sensor assembly, the first element and the third element being fixed to the respective printed circuit boards; mounting said second element to a first carrier bushing and the fourth element to a second carrier bushing, and wherein each of said first and second carrier bushings are configured for alignment with and mounting to the pair of pivotal shafts so as to provide said pivoting in concert with the pair of pivotal shafts; and assembling the first carrier bushing and the second carrier bushing to the respective first sensor mount and the second sensor mount. The method of making the pedal assembly also includes aligning and mounting the first carrier bushing and the second carrier bushing of the first sensor assembly and second sensor assembly to the pair of pivotal shafts so as to provide said pivoting in concert with the pair of pivotal shafts, thereby mounting the first sensor assembly and the second sensor assembly to the vehicle mounting bracket.

Other aspects, features, and advantages of the present disclosure will become apparent from the following detailed description, the accompanying drawings, and the appended claims.

The accompanying drawings facilitate an understanding of the various embodiments of this disclosure. In such drawings:
FIG. 1 shows a front, left perspective view of a pedal assembly;
FIG. 2 illustrates an exploded view of sensor assemblies relative to the pedal assembly of FIG. 1;
FIG. 3 shows an exploded, front, right perspective view of the sensor assemblies from the pedal assembly of FIG. 1;
FIG. 4A illustrates an exploded view of the pedal assembly of FIG. 1;
FIG. 4B illustrates an exploded view of the pedal assembly of FIG. 1;
FIG. 5 illustrates a cross sectional view of line 5-5 in FIG. 1;
FIG. 6 illustrates a detailed view of the cross section in FIG. 5, showing a first sensor assembly on one side thereof;
FIG. 7 illustrates a detailed view of the cross section of FIG. 6 showing the first sensor assembly including housing and bushing associated therewith;
FIGS. 8 and 9 show a first exploded view and a second exploded view of the parts of the first sensor assembly of FIG. 7;
FIGS. 10 and 11 show a first side and a second side, respectively, of the assembled first sensor assembly;
FIG. 12 illustrates a detailed view of the cross section of FIG. 6 showing the second sensor assembly including housing and bushing associated therewith;
FIGS. 13 and 14 show a first exploded view and a second exploded view of the parts of the second sensor assembly of FIG. 12;
FIGS. 15 and 16 show a first side and a second side, respectively, of the assembled second sensor assembly;
FIG. 17 shows a schematic diagram of communication between the sensor assemblies and controller;
FIG. 18 illustrates an exemplary circuit diagram including the features shown in FIG. 17;
FIG. 19 illustrates a cross sectional view of the assembled pedal assembly according to the embodiment of FIG. 4B;
FIG. 20 illustrates a backside view of the assembled pedal assembly according to the embodiment of FIG. 4B;
FIGS. 21-22 shows a cross-sectional views of the pedal assembly of FIG. 4B, detailing leveraging parts on the mounting bracket or housing for accommodating movement of leaf springs;
FIGS. 23-24 provide examples of movement of the pedal assembly of FIG. 4B, including illustrating, in cross-sectional views, operation and movement of the leaf spring(s) with respect to the leveraging parts.

As evident by the drawings and below description, this disclosure relates to a pedal assembly having a sensing system including multiple sensors for detecting /sensing pedal position and displacement. Rather than being incorporated into the housing or bracket for the pedal assembly itself, the disclosed sensing system includes first and second sensors mounted on either side of a pedal arm i.e., on pivotal shaft(s). For example, an inductance target is provided on a first side of the pivotal shaft(s) and pedal arm, and a magnet is provided on second side of the pivotal shaft(s) and pedal arm, according to embodiments herein. Housings and sensors for each of the target and magnet are also provided on each side in a fixed configuration for sensing. This arrangement enables, among other features, maintenance of an constant or essentially constant air gap between the moving elements that are sensed and the sensors that detect the movement for proper sensing and operation with regards to sensing the target and magnet. In embodiments, by securing the spacing between the sensing parts on either side of the pedal arm, the disclosed design allows for tolerances within the pedal assembly, as well as any relative movement of the shaft (e.g., shifting), without an unacceptable adverse effect on the air gap. In addition to consistency with regards to spacing, the use of the two types of sensors provides redundancy that accommodates build tolerance and pedal lateral movement during operation/loading for accuracy with regards to output readings. These and other advantageous features will be further evident via the drawings and description below.

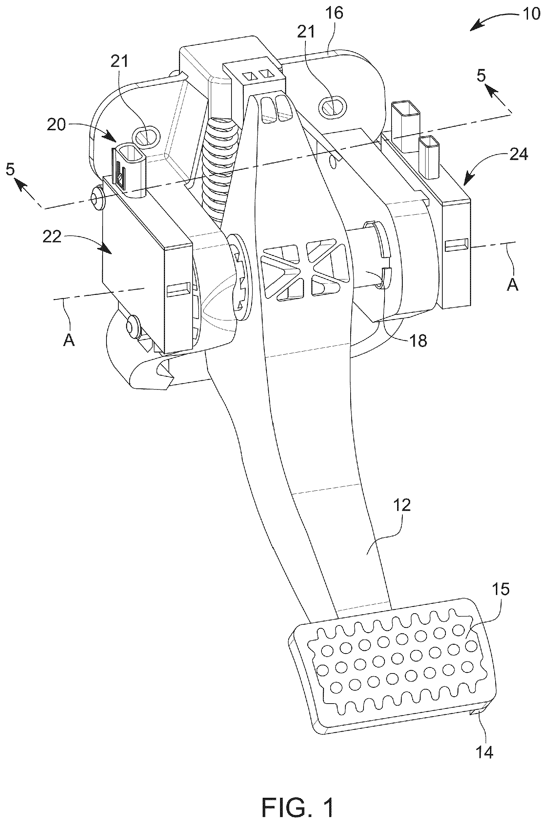

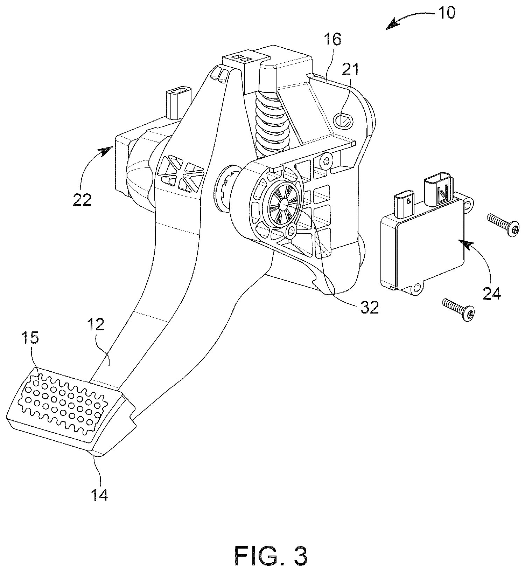

FIGS. 1-4 illustrate a pedal assembly 10 (also referred to as an actuating assembly), that activates a functional system of a vehicle, according to an embodiment of the present invention. In the illustrated embodiment, the pedal assembly 10 is in the form of a brake pedal assembly for a vehicle; such a brake pedal assembly 10 may be of the adjustable-type or the conventional non-adjustable type. However, the assembly 10 may be a parking brake pedal assembly or any other lever assembly and is not intended to be limiting.

According to embodiments herein, the pedal assembly 10 includes a pedal arm 12 with a first (proximal) end and a second (distal) end. The pedal arm 12 is configured for movement to and between a first arm position and a second arm position when pressure from a driver is applied or released to the pedal arm 12. Generally, the first arm position may be referred to as a home position, or default position, whereas the second arm position may be any other position away from the home/default position. According to some embodiments, the pedal arm 12 may include an elongated lever structure as shown in the Figures, while in other embodiments the pedal arm 12 may have a short distance between the first and second ends. Any structure supporting the pedal pad for movement about a pivotal connection can be considered a pedal arm., and any length or configuration may be used (especially as mechanical leverage for operating a mechanical linkage to transfer force is not involved in an electronic pedal assembly). A vehicle mounting bracket 16 (or housing of the pedal assembly) is designed to be fixedly secured inside the passenger compartment of the vehicle, e.g., via fasteners or bolts (not shown) placed through a number of openings 21 and into a structure of the vehicle. For example, the bracket could be mounted to the vehicle firewall, the structure of the dashboard, or the floor. The first end of the pedal arm 12 is pivotally mounted relative to such vehicle mounting bracket 16. More specifically, a pair of pivotal shafts 18 is configured for placement and pivoting relative to extension arms 17 of the vehicle mounting bracket 16. The pair of pivotal shafts 18 extend laterally from the first end of the pedal arm 12 for pivotally mounting the pedal arm 12 to the vehicle mounting bracket 16 such that movement of the pedal arm 12 between the first arm position and the second arm position causes pivotal movement of the pair of pivotal shafts 18 about a pivot axis A-A, according to embodiments herein.

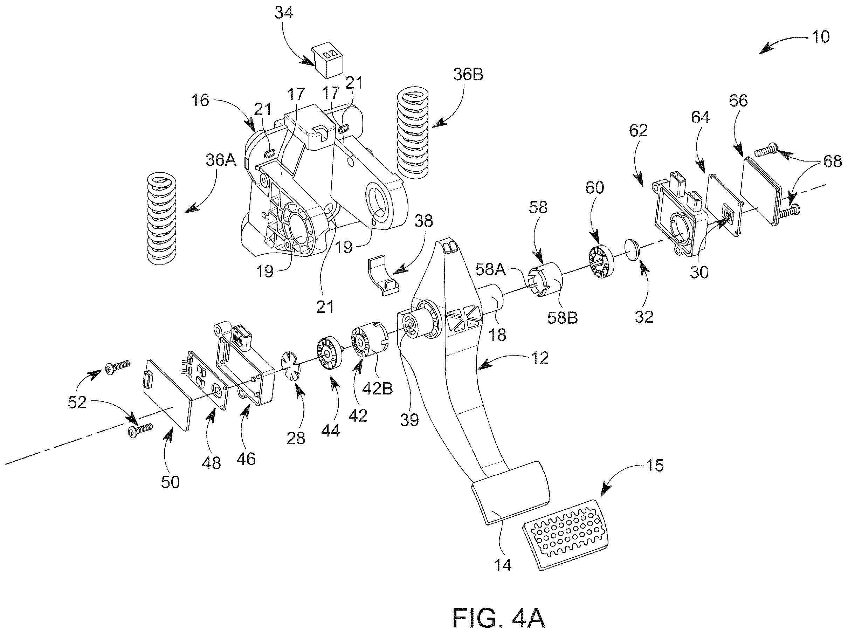

In embodiments, the pair of pivotal shafts 18 are outer ends of a singular pivot rod or shaft 18. In such an instance, for example, each extension arm 17 [of the vehicle mounting bracket 16] includes a hole 19 or opening therein for receipt of an end of the single pivot shaft 18 therethrough (see, e.g., FIG. 4A). In embodiments, the pivotal shaft(s) 18 may be in the form of one or more pivot tubes. In other embodiments the pivot shafts could be separate components each attached to opposing sides of the pedal arm end or molded integrally with the pedal arm end. Throughout this disclosure, the terms "pivotal shafts" and "pivot shaft" may be used interchangeably for element 18, providing the pivotal movement as a result of movement of the pedal arm 12 and without departing from the embodiments wherein one shaft or two shafts are provided.

The first end of the pedal arm 12 is rotationally fixed and operatively connected to the pivotal shaft(s) 18 to provide pivotal movement (or rotational movement) to pivotal shaft(s) 18 during movement of the pedal arm 12 between the first and second arm positions. The pivotal shaft(s) 18 are provided on an operating pivot axis A-A for the pivotal movement of the pedal arm 12 relative to the vehicle mounting bracket 16, according to embodiments herein. However, in other embodiments, the pedal arm 12 may be pivotally mounted to the vehicle mounting bracket 16 in any other suitable manner. Likewise, the pedal arm 12 may be adapted to be pivotally mounted to any type of bracket, such as a bracket mounted to the vehicle's firewall, or any other suitable structure.

A pedal plate 14 is provided on the second end of the pedal arm 12, for depression by a foot of a driver. Optionally, a pedal pad 15 may be provided or mounted on the pedal plate 14, which may be made of rubber, plastic, or another higher friction material to discourage slipping of the driver's foot. Provided on or adjacent the vehicle mounting bracket 16 and pedal arm 12 are also a number of additional features, such as shown in the exploded view of FIG. 4A, for example. An upper end stop 34 may be provided on the vehicle mounting bracket 16, according to embodiments herein, to limit pivotal movement of the pedal arm 12 relative thereto, and thus establishes a limit to prevent the pedal arm 12 first end from traveling forward (which in turn limits the upward movement the pedal plate). As generally understood in the art, the upper end stop 34 may help position the pedal arm 12 while at rest in its home position and not in use, thereby securing its height and providing a comfortable and accessible position for a driver. FIG. 4A also illustrates an exemplary spring assembly 36, wherein at least two springs 36A and 36B are provided as part of the pedal assembly 10 in accordance with a non-limiting embodiment. While two springs are shown, the number of springs is not intended be limiting. That is, a singular spring could be used in the spring assembly 36, however, the use of two springs in the illustrated embodiment allows for redundancy, as described later. In an embodiment, the springs 36A and 36B are nested. In one embodiment, the nested springs 36A, 36B are coil springs arranged in parallel (one inner and one outer) and designed to dampen forces applied by a user to the pedal arm 12. In an embodiment, the two springs 36A, 36B are each wound opposite to the other (i.e., one is wound in the right hand direction, and the other is wound in the left hand direction), e.g., to avoid coils from interlocking with each other. In an exemplary non-limiting embodiment, one or more rubber spacers and/or strips may be provided as part of the spring assembly 36, for example. The rubber spacer or rubber strip may be placed between coils on the inner spring 36A. The rubber strip is intended to keep the nested springs of the spring assembly 36 separated during operation - i.e., the rubber strip may be secured between the coils of the inner spring 36A, and the thickness of the rubber strip may establish a gap to the outer spring 36B. As they operate/compress, the rubber strip keeps them separated and prevents noise. However, use of rubber spacer(s) or strip(s) is not necessary. In an embodiment, the springs 36A and 36B may be separated by separate pockets provided in the housing / vehicle mounting bracket 16 and a rib/slot/pocket style features may be included under the arm in which they translate during pedal application. Both springs work together to achieve the desired spring force to translate the desired pedal pad force by the customer. The two springs are used in the spring assembly 36 for redundancy; in case one of the springs breaks, the remaining spring is still able to send the pedal arm/lever back to its home position. In accordance with embodiments, the springs of spring assembly 36 are compression springs designed to achieve customer desired pedal force characteristics. However, other types springs - including, but not limited to leaf springs, or rubber springs, etc. - may be utilized in spring assembly 36. For example, two leaf springs may be utilized for redundancy and in order to change the spring rate and customer feel when using the pedal assembly; an example of such is shown and described below with reference to FIGS. 4A and 19-24. Further, more than two springs may be utilized as part of spring assembly 36. A hysteresis assist damper 38 may also or alternatively be provided as part of the pedal assembly 10, in accordance with an embodiment. The damper 38 may be a spring type structure (e.g., a leaf spring) designed to provide hysteresis during return travel of the pedal arm 12. Damper 38 is friction based; i.e., the damper 38 is connected to the pedal arm 12, and is configured to slide across a bottom of the housing surface / vehicle mounting bracket 16. The sliding of the damper 38 assists in substantially reducing and/or avoiding a spring-back feeling on the pedal pad 15 (or plate 14) as the customer / user releases/returns the pedal arm/lever 12 back to home position. These and other advantages of such features are generally appreciated by those skilled in the art.

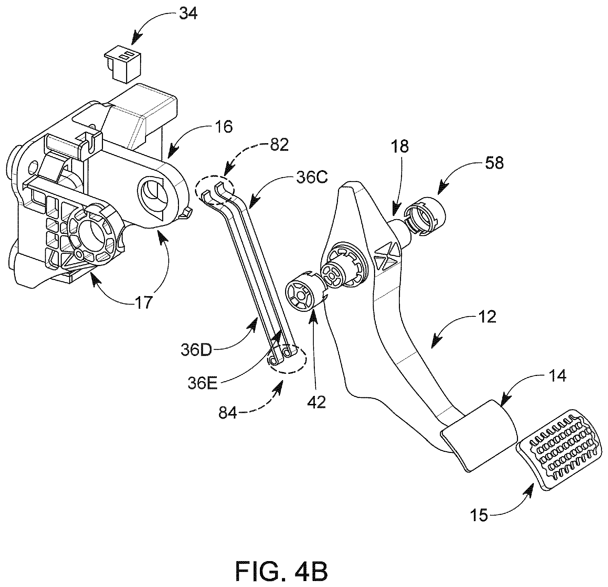

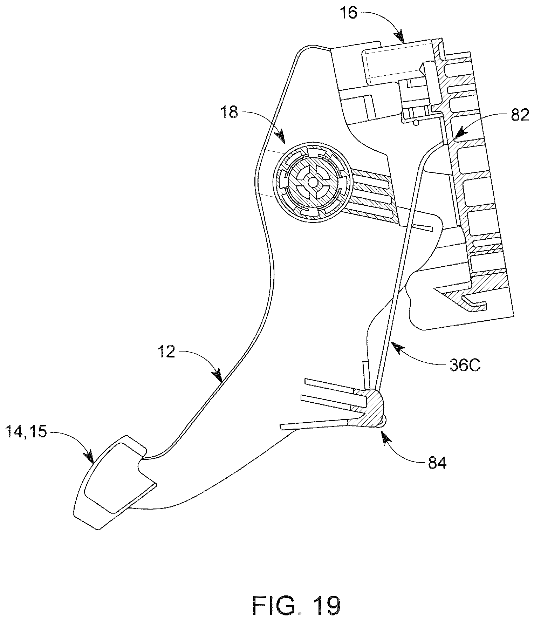

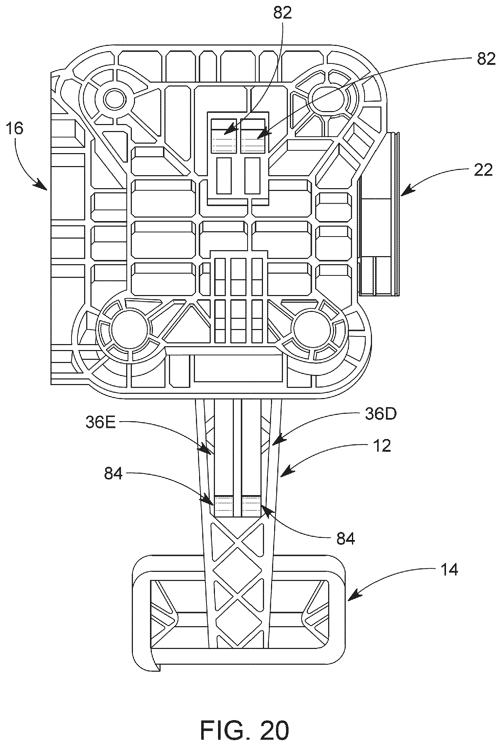

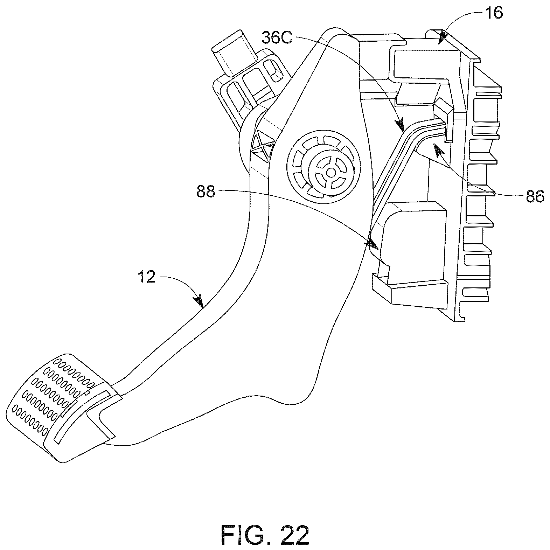

As mentioned above, according to a non-limiting embodiment, the spring assembly 36 may include at least two leaf springs 36D and 36E (in lieu of the coil springs 36A and 36B), which are shown as part of exemplary spring assembly 36C in FIGS. 4A and 19-24. Like the spring assembly 36, spring assembly 36C also provides redundancy and the ability to alter the spring rate feel to the user, as previously described and thus not repeated here. Again, the number of springs is not intended be limiting. That is, a singular leaf spring could be used in the spring assembly 36. FIG. 4A shows an exploded view of some of the parts of the pedal assembly employing spring assembly 36C, which are substantially similar to all of those discussed herein with regards to pedal assembly 10 with spring assembly 36 (and thus not all parts are necessarily illustrated in the related figures for this embodiment), with an exception including utilizing leaf springs 36D and 36E and minor structural changes to vehicle mounting bracket 16 and its housing and pedal arm 12 for securing the leaf springs 36D and 36E. For example, as generally shown in FIG. 4B and in the cross sectional view of FIG. 19, each of the leaf springs 36D and 36E generally include an elongated, plate body comprising a length that extends (and corresponds to a length) from the bracket 16 to the pedal arm 12 while at rest (or a home position). A top end 82 of each of the leaf springs 36D, 36E may be secured to or in the vehicle mounting bracket 16, while a bottom end 84 of each thereof is secured to a back section of the pedal arm 12. In an exemplary embodiment, top ends 82 of the springs 36D and 36E include a hook portion for insertion and securement into a slot and holding area of the vehicle mounting bracket 16. The ends 82 may be pushed up against the housing/bracket 16 for leverage. The backside view of FIG. 20 illustrates an example wherein the hooks of top ends 82 are inserted into a respective opening (see, e.g., FIGS. 20 and 22) and then secured within a back portion of the bracket 16. In an exemplary embodiment, bottom ends 84 of the springs 36D and 36E include a loop portion thereon. The loop portion of bottoms ends 84 may include a curled end for looping around and securing to a corresponding peg element that is provided on a back of the pedal arm, as generally represented in FIG. 20, for example. In one embodiment, the use of the loop portion or curled end on the springs 36D, 36E allows for limited lateral or sliding movement along the peg to create friction, as needed. Of course, the elements and structures used to hold the ends of the springs 36D and 36E are not intended to be limiting and these are examples only. Generally, any structures or devices may be utilized to trap the ends 82, 84 therein and limit lateral movement of the springs 36D and 36E relative to the bracket 16 and pedal arm 12.

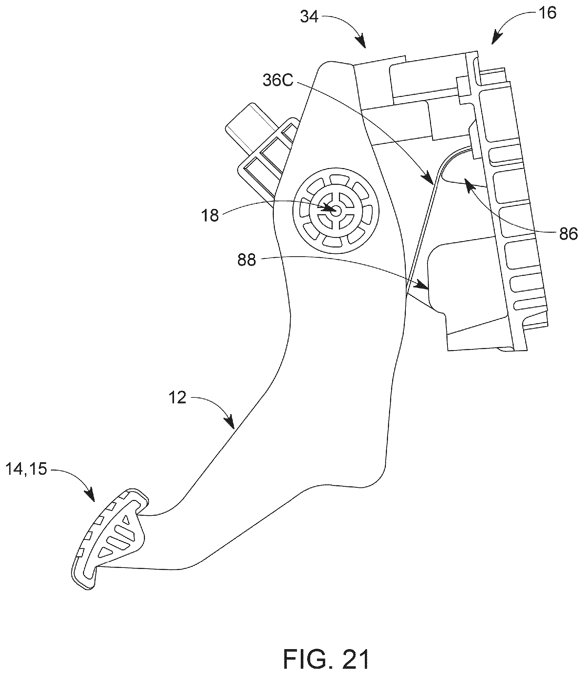

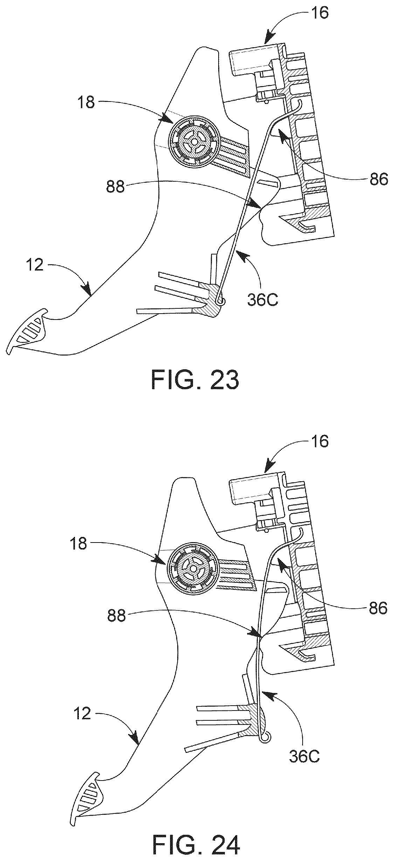

Moreover, the vehicle mounting bracket 16 includes as part of its inner housing two leveraging parts 86, 88 - or fulcrum points - which are configured for accommodating movement and dampening of leaf springs, as well as allowing changes to the spring rate or achieving a variable spring rate, according to an embodiment. FIGS. 21-22 shows a cross-sectional views of the pedal assembly of FIG. 4B, detailing an exemplary embodiment for placement of said leveraging parts 86 and 88 on the mounting bracket, in an embodiment. As shown, a first leveraging part 86 may be provided adjacent to the openings for securing top ends 82 of the springs 36D and 36E. The first leveraging part 86 may include a fulcrum surface having a formed or molded ramp portion that has an outer curvature or profile onto which the leaf springs 36D and 36E may sit or rest in a home position, while also allowing variable spring rate (optional) and leveraging movement (e.g., pivoting) and bending of the leaf springs 36D and 36E therearound when the pedal arm is moved from the home position. That is, the first leveraging part 86 allows for at least top portions [adjacent the top ends 82] of the leaf springs 36D and 36E to flex vertically and move/pivot around the fulcrum surface of the first leveraging part 86 when the pedal arm is moved or pivoted. Further, as shown in the Figures, a second leveraging part 88 may be provided on a lower part of the vehicle mounting bracket 16, i.e., provided and spaced from the first leveraging part 86 such that it is relatively below the part 86. This second leveraging part 88 may also be a fulcrum surface which includes a formed or molded ramp portion with an outer curvature or profile for accommodating and leveraging at least part of the bodies of the leaf springs 36D and 36E during contact therewith. For example, in a home position, at least bottom portions [adjacent, near, or closer to the bottom ends 84] of each of the leaf springs 36D and 36E may be spaced from the second leveraging part 88, which is generally illustrated in FIG. 23, for example. However, when a user operates the pedal assembly 10 via pushing on pedal plate 14 and thus pivoting or moving pedal arm 12, the leaf springs 36D and 36E of spring assembly 36C may be flexed such that their bodies are bended and leveraged into contact with and pivoted around the fulcrum surface of the second leveraging part 88 (in addition to flexing about the fulcrum surface of first leveraging part 86). The amount of bending and contact with the second leveraging part 88 depends on the amount of movement of the pedal arm 12, which is represented in FIG. 24, for example. Still, when contacted by leaf springs 36D and 36E, second leveraging part 88 allows for the leaf springs 36D and 36E to flex vertically and move/pivot around the second leveraging part 88 when the pedal arm is moved or pivoted. Further, the leveraging part 88 allows for variable spring rate, as described below.

Accordingly, the combination of first and second leveraging parts 86 and 88 provides dampening assistance to the spring assembly 36C.

It is noted that the outer profile or outer curvature of each of the first and/or second leveraging parts 86 and 88 may be altered based on customer / user preference. That is, the spring rate and rate of dampening or leverage may be altered via altering the profile or curvature of one or more of the fulcrum surfaces of the leveraging parts 86 and/or 88, according to embodiments herein. In a non-limiting embodiment, for example, one or more interchangeable caps may be provided over and onto second leveraging part 88. Each of the caps may include a different outer profile or curvature for its respective fulcrum surface. The cap(s) may be mounted and secured over second leveraging part 88, thereby providing an option to more easily modify and interchange between provide different profiles (or curvatures) - and thus change the flexing and spring rate of the spring assembly 36C. Use of such caps may allow for a manufacturer to utilize the vehicle mounting bracket 16 with different parts (like different pedal arms 12) for different models of pedal assemblies.

In addition, the use of two leaf springs as provided in spring assembly 36C may provide assistance with regards to hysteresis during return travel of the pedal arm 12. In an embodiment, the spring assembly 36C may be provided in combination with use of damper 38 to assist in substantially reducing any spring-back feeling on the pedal as the customer / user releases/returns the pedal arm/lever 12 back to the home position. Again, these benefits and other advantages of such features may be readily appreciated by those skilled in the art.

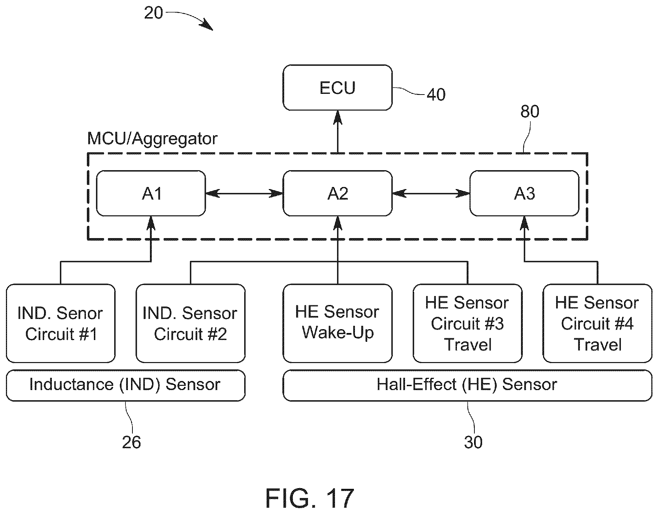

Turning back, despite the type of spring assembly 36 or 36C, or another type utilized therein, the pedal assembly 10 includes a sensing system 20 (see, e.g., FIG. 1, FIG. 17) for sensing a displacement of the pedal arm 12. The sensing system 20 has a first sensor assembly 22 and a second sensor assembly 24 in accordance with embodiments. As understood by the description herein, both sensor assemblies 22, 24 are configured to detect a position or rotation of the pivotal shaft(s) 18 via electromagnetic fields, without physical contact. As a result of such sensing, the sensing system 20 provides feedback, e.g., to a controller 40 (shown in FIG. 17, for example) or processor associated with the vehicle. For example, in embodiments, the controller 40 is configured to receive readings and an output from the sensing system (as input to the controller) in order to implement braking force based on the received readings, which is generally understood by one skilled in the art.

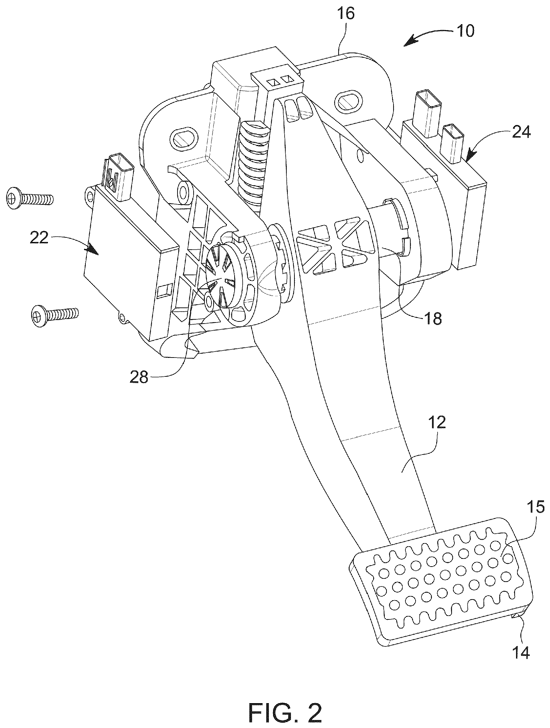

In accordance with embodiments herein, the first sensor assembly 22 is provided on a first side (e.g., left side as shown in the Figures) of the pedal assembly 10. The second sensor assembly 24 is provided on a second side (e.g., right side as shown in the Figures) of the pedal assembly 10. The sensor assemblies 22, 24 may also be referred to as left and right sensor assemblies as well. Such locations are interchangeable and not intended to be limiting. Generally, as shown in FIG. 2, for example, the first sensor assembly 22 includes, in an embodiment, a first element 26 spaced apart from a second element 28 in an axial direction of the pivot axis A-A of the pivot shaft(s) 18. As such, the second element 28 is rotationally movable (displaced from a default position) with the pivotal movement of the pivotal shaft(s) 18 about the axis A-A as a result of the movement of the pedal arm 12 from the first arm position, such that the second element 28 is displaced relative to the first element 26. The first sensor assembly 22 is configured to sense the displacement of the pedal arm 12 based on the displacement of the second element 28 relative to the first element 26. The first element 26 may also be referred to as a sensing element to reflect its role as the element that senses movement of element 28; likewise, the second element 28 may also be referred to as a sensed to target element to reflect its role as the element whose movement is sensed. Likewise, they can also be referred to as the outer element 26 and inner element 28 to reflect their positions in the axial or lateral direction of the assembly.

According to embodiments herein, the first sensor assembly 22 includes a first sensor mount 46 with the first element 26 fixedly mounted thereto. The second element 28 may be pivotally connected to the first sensor mount 46 to maintain an essentially constant spacing between the first and second elements 26 and 28 in the axial direction. As an example, in an embodiment, the first element 26 is stationarily mounted on the vehicle mounting bracket 16 by the sensor mount 46 being fixed to the left side of the bracket 16. In embodiments, the first element 26 is an inductance sensor, which may be associated with a printed circuit board (PCB) 48 and provided in the sensor mount in the form of a housing 46, and the second element 28 is an inductance target, each of which are described in greater detail later below. The PCB 48 may be connected to the controller 40 in accordance with an embodiment.

The second sensor assembly 24 includes, in an embodiment, a third element 30 spaced apart from a fourth element 32 in an axial direction of the pivot axis A-A of the pivot shaft(s) 18. As such, the fourth element 32 is therefore rotationally movable (displaced from a default position) with the pivotal movement of the pivotal shaft(s) 18 about the axis A-A as a result of the movement of the pedal arm 12 from the first arm position, such that the fourth element 32 is displaced relative to the third element 30. The second sensor assembly 24 is configured to sense the displacement of the pedal arm 12 based on the displacement of the fourth element 32 relative to the third element 30. The third element 30 may also be referred to as a sensing element to reflect its role as the element that senses movement of element 32; likewise, the fourth element 32 may also be referred to as a sensed to target element to reflect its role as the element whose movement is sensed. Likewise, they can also be referred to as the outer element 30 and inner element 32 to reflect their positions in the axial or lateral direction of the assembly.

According to embodiments herein, the second sensor assembly 24 includes a second sensor mount 62 with the third element 30 fixedly mounted thereto. The fourth element 32 may be pivotally connected to the second sensor mount 60 to maintain an essentially constant spacing between the third and fourth elements 30 and 32 in the axial direction. As an example, in an embodiment, the third element 30 is stationarily mounted on the vehicle mounting bracket 16 by the sensor mount 62 being fixed to the right side of the bracket 16. In embodiments, the third element 30 is a Hall effect sensor, which is associated with a printed circuit board (PCB) 64 and provided in the sensor mount formed as a housing 62, and the fourth element 32 is a magnet, each of which are also described in greater detail below. The PCB 64 also may be connected to the controller 40 in accordance with an embodiment.

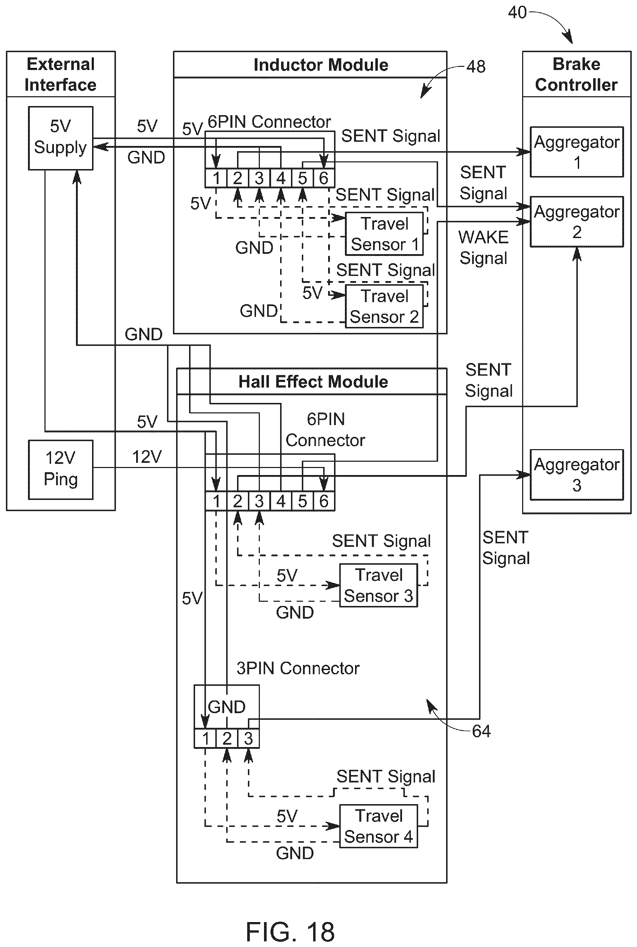

Generally, as understood by one skilled in the art, the inductance sensor 26 is a position sensor that is electrically connected to the PCB 48, such that, when a voltage is supplied thereto (e.g., via a supply as shown in FIG. 18), a magnetic field is generated. The inductance target 28 is within the magnetic field such that, as the pivotal shaft(s) 18 is moved via application of force applied to the pedal arm 12 (i.e., pivotal or rotational movement), the inductance sensor 26 is configured to detect a variation and/or change (in impedance) in the magnetic field. The inductance sensor 26 then relays such to the PCB 48 which converts such variations or changes into an output signal which may be sent or transmitted to the controller 40 for processing. Specifically, the movement of the target 28 within the field affects the field, which can be detected by the PCB through the sensor 26, and the function of such inductance sensors is well known. The impedance changes effectively result in the first sensor assembly 22 determining a position of the pedal arm 12 based on the movement of the target 28 relative to the inductance sensor 26.

As also understood by one skilled in the art, the Hall effect sensor 30 (also known as a Hall element) is an angular position sensor that is electrically connected to the PCB 64, configured to detect a magnetic field generated by associated magnet 32. The magnet 32 may be a permanent magnet (e.g., an earth magnet or ferrite magnet) or an electromagnet which creates a magnetic field and is placed near the Hall effect sensor 30. In addition to being activated to sense the presence of a magnetic field from the magnet 32, the Hall effect sensor 30 is designed to detect a change in magnetic field. As the pivotal shaft(s) 18 is moved via application of force applied to the pedal arm 12 (i.e., pivotal or rotational movement), the Hall effect sensor 30 is configured to detect a variation and/or change in the magnetic field strength as a result of the changing position of the magnet 28 as it is moved or pivoted, and thus affects the Hall voltage / output generated by the Hall effect sensor 30. The Hall effect sensor 30 then relays the detection to the PCB 64 which converts such variations or changes into an output signal which may be sent or transmitted to the controller 40 for processing. The output from the Hall effect sensor may be in the form of an analog voltage, analog current, or a digital signal, depending on the sensor design. The detected changes in magnetic field effectively result in the Hall effect sensor 30 and second sensor assembly 24 determining an angular position of the pedal arm 12 based on the movement of the magnet 32.

More specifically, both sensor assemblies 22 and 24 act as inputs, e.g., to the controller 40, thereby resulting in combined input to the controller 40 for determining readings - e.g., transmission of pedal position and movement - associated with and applied to the pedal arm 12. The controller 40 may correlate the output voltages (or other measurements) of the first and second sensor assemblies 22 and 24 to the angular displacement of the pivotal shaft(a) 18 and/or pedal arm 12.

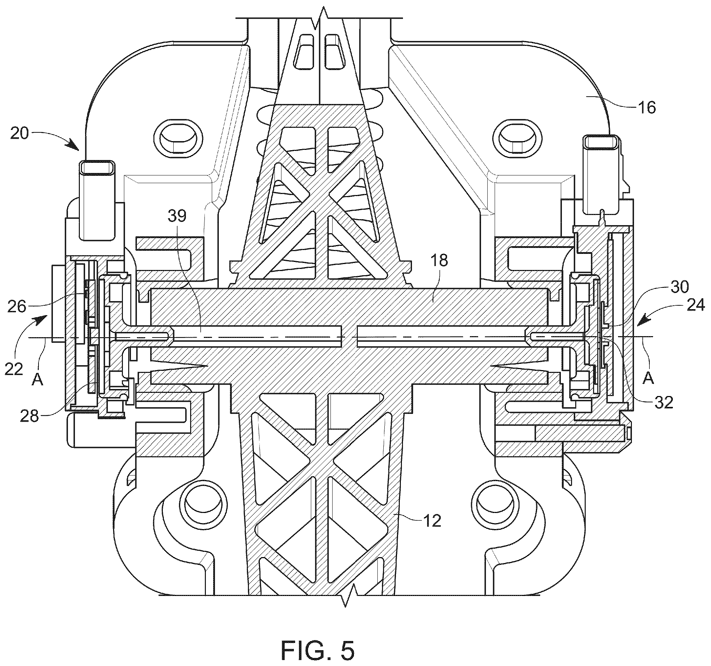

In one embodiment, as shown in FIG. 5, for example, the inductance sensor 26 and target 28 and Hall Effect sensor 30 and magnet 32 are designed concentric to the pivot shaft 18 (and thus the axis A-A) of the pedal arm 12, in order to achieve maximum accuracy, range and programmability/customization, among other features.

To obtain such an arrangement, i.e., for placement of these elements along and concentric to the axis A-A such that there is essentially constant spacing between the element pairs (i.e., between the first and second elements, and between third and fourth elements), the sensor assemblies 22 and 24 herein include the aforementioned mounting features, i.e., the first sensor mount 46 and the second sensor mount 62. The first sensor mount 46 and second sensor mount 62 enable the second and fourth elements 28 and 32 to have their pivotal connection relative to their respective sensor mounts to maintain an essentially constant spacing with the first and third elements 26 and 30, respectively, in the axial direction. In particular, each of the second element 28 (inductance target) and the fourth element 32 (magnet) is connected to its respective pivotal shaft 18 in an axially movable and pivotally fixed manner such that (a) each of the second and fourth elements 28 and 32 pivots in concert with its respective pivotal shaft 18 and (b) relative axial movement is permitted between each of the second and fourth elements 28 and 32 and its respective pivotal shaft. This enables a set connection relative to the sensor mounts, thereby achieving a consistent air gap for proper interfacing between the moving elements and fixed elements, and still allowing for rotation, for example. The constant spacing between the elements while still permitting relative axial movement between the second and fourth elements 28 and 32 allows for tolerances of forces on the pedal assembly 10 without altering the air gap (and thus output readings) for the sensing system. For example, if the pedal arm 12 is subject to a lateral force by the user (such as during operation, or perhaps a person getting in/out of the vehicle), the allowance of relative axial movement avoids force from pulling or pushing on the second/fourth elements 28/32, which could affect the spacing (relative to the first/third elements 26/30). In a similar example, permitting this axial movement also allows for manufacturing tolerances. If the tolerances allow some lateral movement of the pedal arm 12 or the pivotal shaft(s) 18, or even variations between different units, the allowance of axial play lets the second and fourth elements 28 and 32 essentially maintain the same spacing relative to the first and third elements 26 and 30. Also, even if there is no lateral movement of the pedal arm 12/shaft(s) 18, it is possible that manufacturing tolerances for the vehicle mounting bracket 16 could cause variations in the relative location of the first and third elements 26 and 30. However, by having the second and fourth elements 28 and 32 connected to the first and second sensor mounts as described herein, and allowing some axial play relative to the pivotal shaft(s) 18, the relative spacing therebetween is effectively maintained. Accordingly, the elements are configured to maintain proper sensing of the fields, and, therefore, more accurate sensor readings to output appropriate signals. Additional features and advantages are also noted throughout this disclosure.

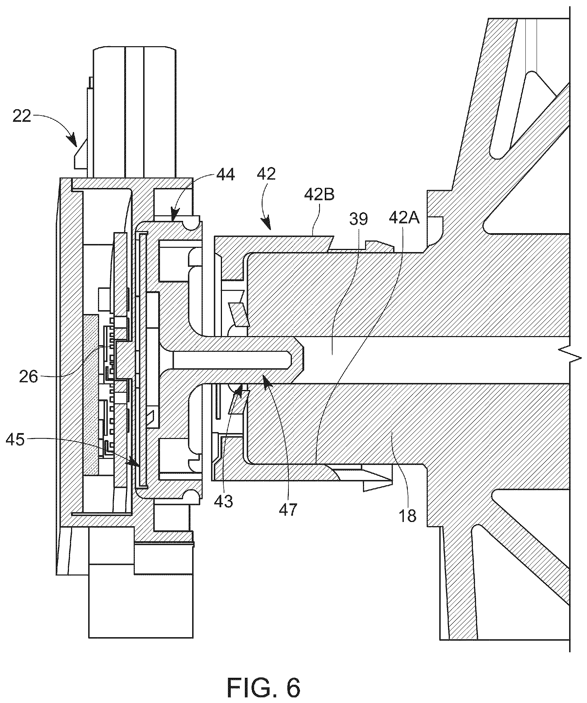

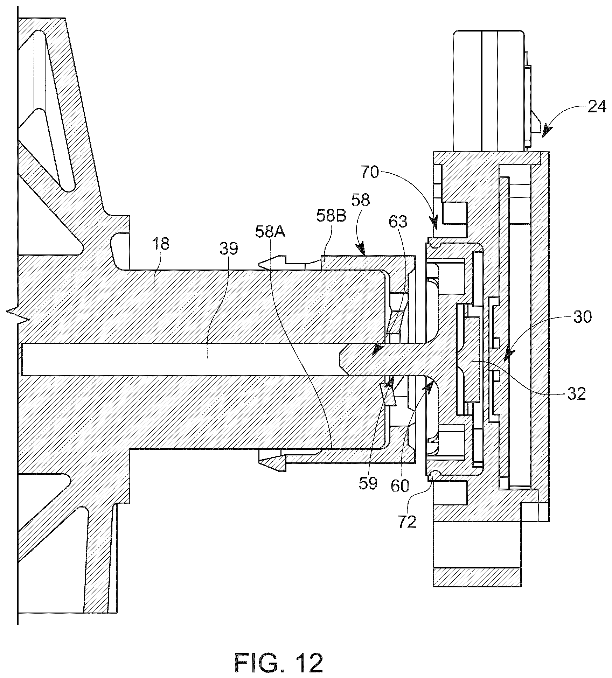

According to embodiments, shown in FIG. 4A as well as in FIGS. 5-6, each of the sensor assemblies 22 and 24 are mounted to the pivot shaft 18 via pivot bushings 42, 58 and intermediate carrier bushings 44, 60, which are part of the first and second sensor mounts. FIG. 5 illustrates a cross section of the pivot shaft 18 which includes an opening or through-hole 39 according to one embodiment. In an embodiment, openings may be provided on either side of the pivotal shafts 18 and do not need to extend entirely through a length of the shaft; that is, while the term through-hole is used in this disclosure, such is not intended to be limiting. In order to facilitate mounting of the sensor assemblies 22 and 24 on either end of the pivot shafts 18, a first pivot bushing 42 is provided on a first side (e.g., the left side as shown in the Figures) of [one of a pair of] pivotal shaft(s) 18 and a second pivot bushing 58 is provided on the second or opposite side (e.g., the right side as shown in the Figures) on [the other of the pair of] the pivotal shaft(s). Each pivot bushing 42 and 58 has effectively the same design. That is, each of the pivot bushings 42, 58 are designed as a cap or cup-shaped structure, which includes a wall 42B, 58B with a receiving opening 42A, 58A respectively therein (see, e.g., FIGS. 6 and 12), for alignment with and receipt of an end of the pivot shaft(s) 18 therein. In an exemplary embodiment, the pivot bushings 42, 58 may capture (i.e., receive) the ends of the pivotal shafts 18. Each pivot bushing 42, 58 also includes a corresponding alignment opening 43, 59, respectively, that aligns with the through-hole 39 on an end of the pivotal shaft(s) 18 when assembled thereon.

The pivot bushings 42, 58 are optional and used to secure the pivot shafts 18 to the side walls of the bracket 16 in the holes 19 on the extension arms 17 of the vehicle mounting bracket 16. Specifically, each pivot bushing 42, 58 is cup-shaped with its outer wall (the bottom of the "cup") engaging the end of the respective pivot shaft 18, while the axially extending wall 42B, 58B (perpendicular to the outer wall) is inserted in the hole 19. The axially extending wall 42B, 58B of each pivot bushing 42, 58 has a lip or catch on the end thereof to secure against the inner arm 17 edge surrounding the opening 19 to establish a snap-fit connection. These structures may be entirely omitted, or omitted on just one side, and either or both of the carrier bushings 44, 60 discussed below may be connected to the pivot shafts 18 without the pivot bushings 42, 58 being used.

Intermediate bushings 44, 60 - which are part of the sensor assemblies 22, 24 themselves - are utilized for connecting said sensor assemblies 22, 24 onto the pivotal shaft(s) 18. FIGS. 5 and 6 show an example of this mounting, described below. Furthermore, in the illustrated embodiment each intermediate bushing 44, 60 also acts as a "carrier bushing" for the second and fourth elements (i.e., the inductance target 28 and the magnet 32) of the assemblies 22, 24, so that said assemblies 22, 24 and their elements are mounted along and concentric to the axis A-A of the pivot shaft(s) 18. As described in detail below, the assemblies 22, 24 are designed such that these connections provide consistent air gaps between the respective sensors and target/magnet for a proper interface and accuracy, in addition to rotational translation therebetween the pedal pivot and the target/magnet.

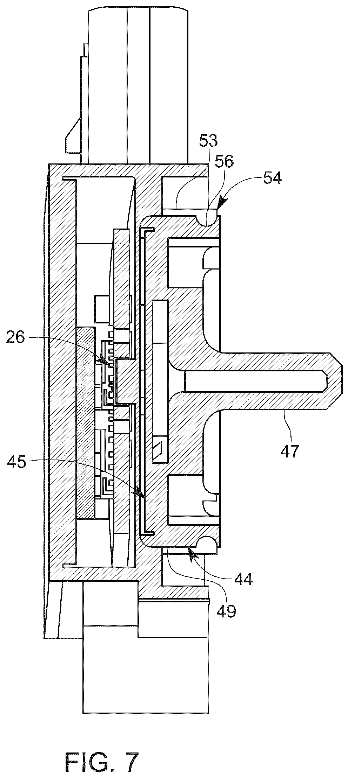

In one exemplary and non-limiting illustrative embodiment shown in the detailed cross-section of FIG. 7 and FIGS. 8-9, intermediate bushing 44, or carrier bushing 44, for the first sensor assembly 22 includes an outer face 45 on a first side thereof, an inner face on a second or opposite side thereof, with an edge 49 extending therebetween. As described later below, the edge 49 includes receiving portion 56 or indentation thereon for locking with a sensor housing 46, thus assembling the carrier bushing 44 and sensor housing 46 as a unit to form the first sensor assembly 22.

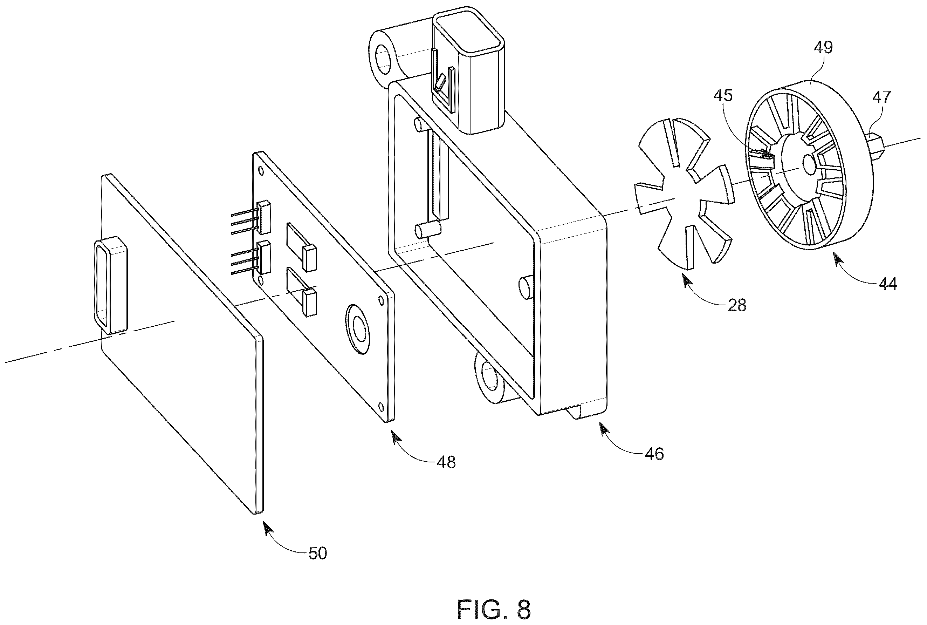

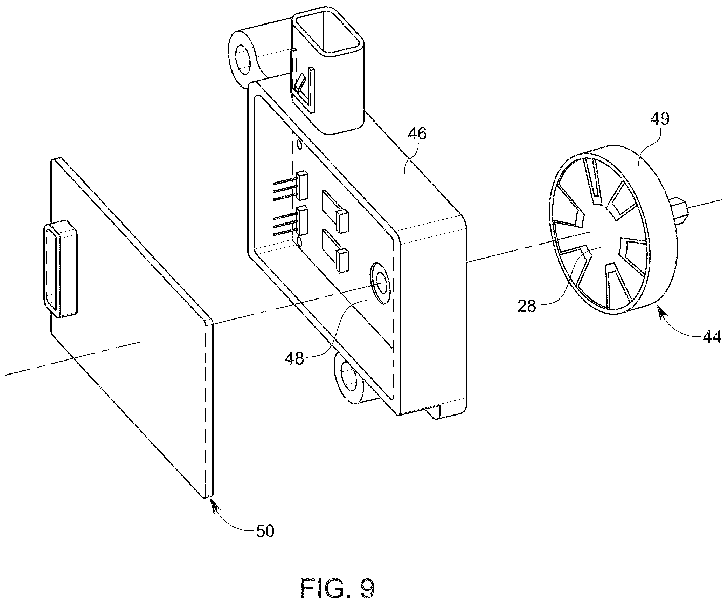

The outer face 45 of the carrier bushing 44 is provided for receiving the inductance target 28 (second element). The outer face 45 may include a frame or rib portions (see FIG. 8) thereon that are sized for receiving and accommodating the arm/blade portions of the inductance target 28 (see FIG. 9, showing the carrier bushing 44 with the inductance target 28 mounted therein). In an embodiment, the inductance target 28 may be assembled mechanically, e.g., with heat-staking, snap-fit, or the like, to the carrier bushing 44. A second side of the carrier bushing 44 has a protrusion or peg 47 extending from the inner face (on the side opposite of the outer face) on the second side thereof, shown in FIG. 7, for example. This peg 47 is designed for insertion into alignment opening 43 of the pivot bushing 42 and into the through-hole 39 of the pivot shaft 18, as seen in FIG. 6, thus mounting the sensor assembly 22 thereon. In an embodiment, the peg 47 includes a tapered distal end. This tapered distal end of the peg 47 rotationally / pivotally fixes the second element / inductance target 28 to its respective pivotal shaft 18 such that it pivots in concert therewith, while still allowing axial movement of the carrier bushing 44 and second element / inductance target 28, by allowing movement of the peg 47 within the through-hole 39. The peg 47 and through-hole 39 can be rotationally secured by any technique, including by being non-circular, faceted, or the like. As previously described, since the second element / inductance target 28 is pivotally connected to the first sensor mount (first sensor housing 46) and the first element / inductance sensor 26 is fixedly mounted, then an essentially constant spacing between the first and second elements in the axial direction is maintained even if there is axial movement of the carrier bushing 44 and pivot shaft 18 or its through-hole 39.

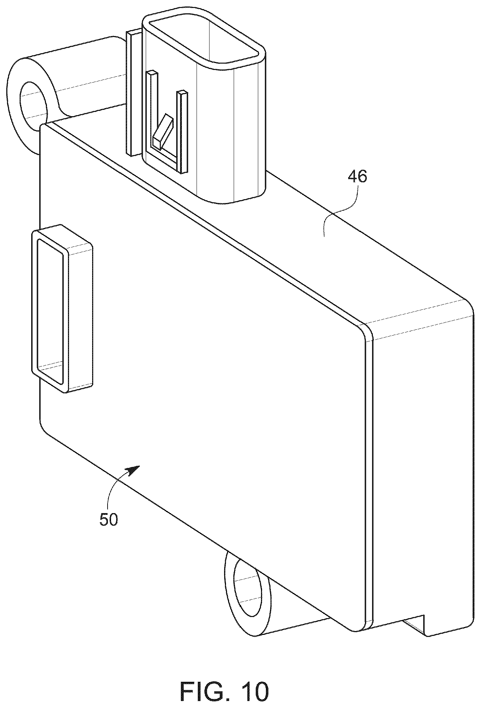

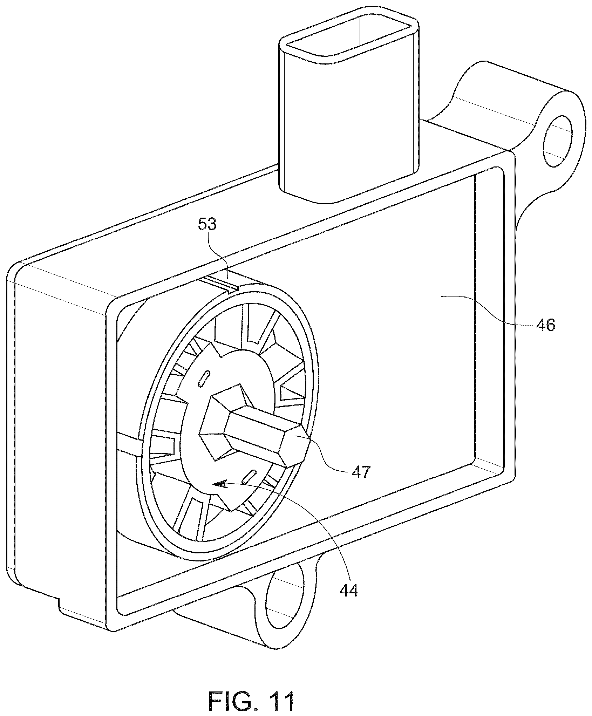

Also shown in FIGS. 8 and 9 are the additional parts of the first sensor assembly 22 which includes the sensor housing 46. The inductance sensor 26 (or first element) is mounted on PCB 48, which is assembled and secured in sensor housing 46. Specifically, the sensor 26 is mounted on a sensor-facing side of the PCB 48, e.g., an inner side in the Figures (see, e.g., FIG. 7). Accordingly, the inductance sensor 26 is effectively facing and aligned with the inductance target 28 on the same axis for sensing purposes. The PCB 48 may include other electrical and/or sensor components as known in the art. A sensor housing cover 50 is secured to the sensor housing 46, e.g., on a first or outer side thereof, to contain the PCB 48 with the sensor 26 mounted thereon and its parts. The sensor housing 46 includes channels and/or openings (shown at the top of the housing, as an example) for terminals extending from the PCB 48. The sensor housing 46 also includes, e.g., on a second side (inner side) thereof, a receptacle 53 having an extension wall with one or more locking features 54 around its edge. The receptacle 53 is designed to receive and hold the carrier bushing 44 via locking feature(s) 54 being inserted into the receiving portion or indentation 56 of the edge 49. FIG. 7 shows how the locking feature 54 may include a tab or projection, according to embodiments herein, that is inserted into the indentation 56 along the edge 49 of the bushing 44. As such, when the assembled target 28 and bushing 44 (shown in FIG. 9) are placed into the receptacle 53, the locking feature(s) 54 snap into the indentation 56, thereby securing the bushing 44 to the sensor housing 46. The locking feature 54 and receiving portion 56 illustrated may also be referred to as a rotatable detent connection or rotatable snap-fit connection which locks the bushing 44 to the housing 46 against axial movement, but allows the bushing 44 to rotate relative to the housing 46. FIGS. 10 and 11 show a first side and a second side, respectively, of the assembled first sensor assembly 22 - including the carrier bushing 44 mounted therein - in accordance with an embodiment herein.

The exemplary illustrative embodiments show that the outer face 45 may be generally circular, and, thus, the edge 49 may be a circumferential edge. Accordingly, the indentation 56 may be provided circumferentially around the edge 49 according to an embodiment. Similarly, the receptacle 53 and its wall on the sensor housing 26 may be a generally circular receptacle, corresponding to the shape of the bushing 44, with the locking feature(s) 54 (and tabs) extending circumferentially around the receptacle 53. However, this shape and design is not intended to be limiting.

The locking feature 54 between the carrier bushing (with target) and sensor housing 26 accomplishes two purposes: (1) to maintain a set connection to the sensor housing 26 to achieve a consistent air gap for the inductance target 28 and sensor 26 to interface properly, and (2) to allow for direct rotational translation between the pedal pivot and the inductance target 28.

To assemble the first sensor assembly 22 onto the pedal assembly 10, first, the receiving opening 42A of the pivot bushing 42 (if used) is aligned with the pivot shaft 18 and pushed thereon, such that the wall 42B surrounds the end of the pivot shaft 18 and its alignment opening 43 is aligned with the through-hole 39 of the shaft 18. The pivot shaft 18 may optionally be mounted into the extension arms 17 of the vehicle mounting bracket 16 as discussed above. The first sensor assembly 22 is then connected to the respective pivot shaft 18 by aligning a tapered end of the peg 47 of the carrier bushing 44 with the alignment opening 43 of the pivot bushing 42 and inserting it therein and then into the bore 39 of the pivot shaft 18. In an embodiment, the assembled first sensor assembly 22 is configured to be fastened or bolted onto the pedal assembly via fasteners 52 (see, e.g., FIG. 4A). In one embodiment, the first sensor assembly 22 is mounted to a first side of the vehicle mounting bracket 16 (see FIG. 1).

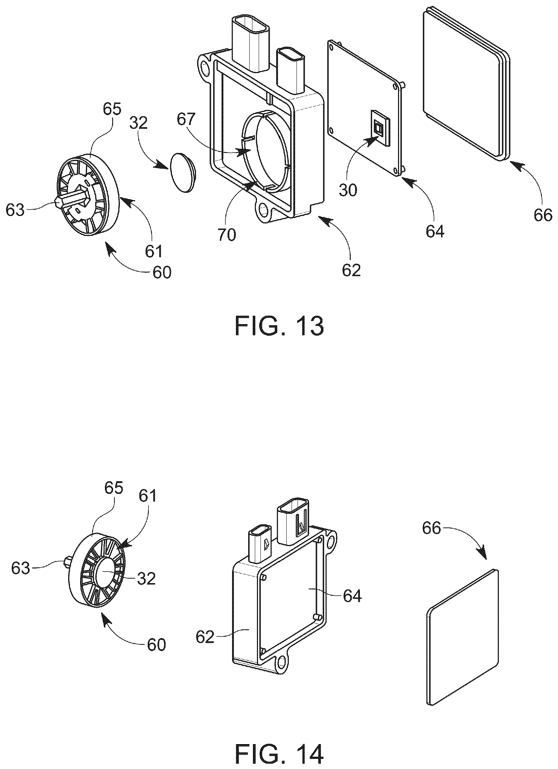

In a similar manner, an exemplary and non-limiting illustrative embodiment of the intermediate bushing 60, or carrier bushing 60, for the second sensor assembly 24 is shown in the detailed cross-section of FIG. 12 and FIGS. 13-14. The carrier bushing 60 includes an outer face 61 on a first side thereof, an inner face on a second or opposite side thereof, with an edge 65 extending therebetween. Like carrier bushing 44, the edge 65 (see FIGS. 13-14) of carrier bushing 60 includes receiving portion or indentation 72 thereon for locking with a sensor housing 62, thus assembling the carrier bushing 60 and sensor housing 62 as a unit to form the second sensor assembly 24.

The outer face 61 of the carrier bushing 60 is provided for receiving the magnet 32 (fourth element). The outer face 61 may include a frame or rib portions (see FIG. 14) thereon that are sized for receiving and accommodating the magnet 32 (see FIG. 9, showing the carrier bushing 60 with the magnet 32 mounted therein). For example, the magnet 32 may be placed in a centrally placed pocket on the outer face 61 of the carrier bushing 60, according to one embodiment. In an embodiment, the magnet 32 may be assembled mechanically, e.g., with heat-staking, snap-fit, or the like, to the carrier bushing 60. A second side of the carrier bushing 60 has a protrusion or peg 63 extending from the inner face (on the side opposite of the outer face) on the second side thereof, shown in FIG. 13, for example. This peg 63 is designed for insertion into alignment opening 59 of the pivot bushing 58 and into the through-hole 39 of the pivot shaft 18, as seen in FIG. 12, thus mounting the sensor assembly 24 thereon. In an embodiment, the peg 63 includes a tapered distal end. This tapered distal end of the peg 63 rotationally / pivotally fixes the fourth element / magnet 32 to its respective pivotal shaft 18 such that it pivots in concert therewith, while still allowing axial movement of the carrier bushing 60 and fourth element / magnet 32, by allowing movement of the peg 63 within the through-hole 39. As previously described, since the fourth element / magnet 32 is pivotally connected to the second sensor mount (second sensor housing 62) and the third element / Hall effect sensor 30 is fixedly mounted, then an essentially constant spacing between the third and fourth elements in the axial direction is maintained even if there is axial movement of the carrier bushing 60 and magnet 32.

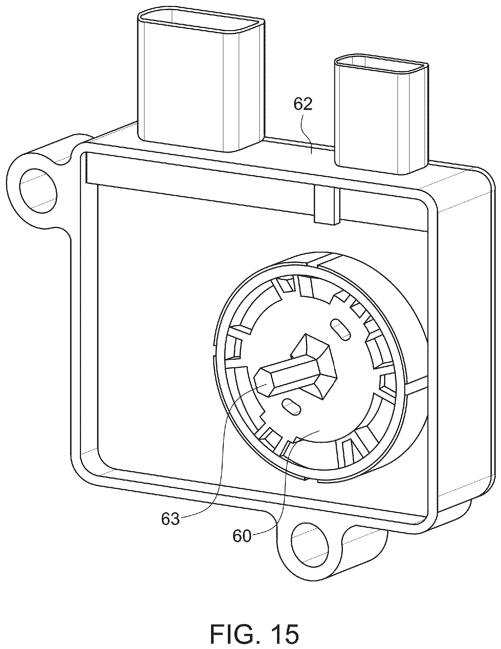

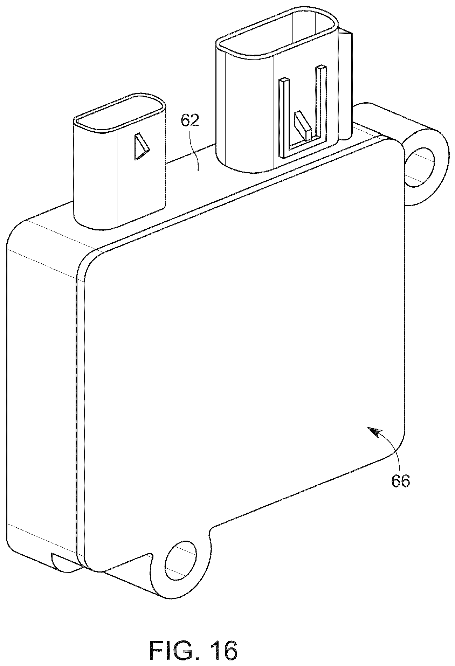

Also shown in FIGS. 13 and 14 are the additional parts of the second sensor assembly 24 which includes the sensor housing 62. The Hall effect sensor 30 (or third element) is mounted on PCB 64, which is assembled and secured in sensor housing 62. Specifically, the sensor 30 is mounted on a sensor-facing side of the PCB 64, e.g., an inner side in the Figures (see, e.g., FIG. 12). Accordingly, the Hall effect sensor 30 is effectively facing and aligned with the magnet 32 on the same axis for sensing purposes. The PCB 64 may include other electrical and/or sensor components as known in the art. A sensor housing cover 66 is secured to the sensor housing 62, e.g., on a first or outer side thereof, to contain the PCB 64 with the sensor 30 mounted thereon and its parts. The sensor housing 62 includes channels and/or openings (shown at the top of the housing, as an example) for wires extending from the PCB 64. The sensor housing 62 also includes, e.g., on a second side (inner side) thereof, a receptacle 67 (see FIG. 13) having an extension wall with one or more locking features 70 around its edge. The receptacle 67 is designed to receive and hold the carrier bushing 60 via locking feature(s) 70 being inserted into the receiving portion or indentation 72 of the edge 65. FIG. 12 shows how the locking feature 70 may include a tab or projection, according to embodiments herein, that is inserted into the indentation 72 along the edge 65 of the bushing 60. As such, when the assembled magnet 32 and bushing 60 (shown in FIG. 14) are placed into the receptacle 67, the locking feature(s) 70 snap into the indentation 72, thereby securing the bushing 60 to the sensor housing 62. The locking feature 70 and receiving portion 72 illustrated may also be referred to as a rotatable detent connection or rotatable snap-fit connection which locks the bushing 60 to the housing 62 against axial movement, but allows the bushing 60 to rotate relative to the housing 62. FIGS. 15 and 16 show a first side and a second side, respectively, of the assembled second sensor assembly 24 - including the carrier bushing 60 mounted therein - in accordance with an embodiment herein.

The exemplary illustrative embodiments show that the outer face 61 may be generally circular, and, thus, the edge 65 may be a circumferential edge. Accordingly, the indentation 72 may be provided circumferentially around the edge 65 according to an embodiment. Similarly, the receptacle 67 and its wall on the sensor housing 62 may be a generally circular receptacle, corresponding to the shape of the bushing 60, with the locking feature(s) 70 (and tabs) extending circumferentially around the receptacle 67. However, this shape and design is not intended to be limiting.

Similar to the inductance features, the locking feature 70 between the carrier bushing 60 (with magnet 32) and sensor housing 62 accomplishes two purposes: (1) to maintain a set connection to the sensor housing 62 to achieve a consistent air gap for the magnet 32 and sensor 30 to interface properly, and (2) to allow for direct rotational translation between the pedal pivot and the magnet 32.

To assemble the second sensor assembly 24 onto the pedal assembly 10, first, the receiving opening 58A of the pivot bushing 58 (if used) is aligned with the pivot shaft 18 and pushed thereon, such that the wall 58B surrounds the end of the pivot shaft 18 and its alignment opening 59 is aligned with the through-hole 39 of the shaft 18. Again, the pivot shaft 18 may optionally be mounted into the extension arms 17 of the vehicle mounting bracket 16, such that both the first and second sensor assemblies 22 and 24 are mounted to the pedal assembly 10 once the pivot shaft 18 is mounted relative to the vehicle bracket 16. The second sensor assembly 24 is then connected to the respective pivot shaft 18 by aligning a tapered end of the peg 63 of the carrier bushing 60 with the alignment opening 59 of the pivot bushing 58 and inserting it therein and then into the bore 39 of the pivot shaft 18. In an embodiment, the assembled second sensor assembly 24 is configured to be fastened or bolted onto the pedal assembly via fasteners 68 (see FIG. 4A). In one embodiment, the second sensor assembly 24 is mounted to a second side of the vehicle mounting bracket 16 (see FIG. 1).

The connection between the second and fourth elements 28 and 32 to the pivotal shafts 18 may be established using other techniques also, including direct or indirect connections. For example, a pivot bushing 42, 58 could be rotationally locked to its associated pivotal shaft 18 and the engagement of the carrier bushing 44, 60 could be with just the opening in the pivot bushing 42, 58 in a rotationally secure engagement that allows axial movement, thus requiring no bore 39 in the pivot shaft 18. That would allow the carrier bushing 44, 60 to rotate with the pivot shaft 18 and pivot bushing 42, 58, while also avoiding axial movement from affecting the gap within the sensor assembly. As another example, the carrier bushing 44, 60 could be omitted. Using the left side as an example to explain, the pivot bushing 42 could have its inner space 42B designed in a non-circular manner and the end of the pivotal shaft 18 could have a matching external shape such that the two are rotationally locked. The second element 28 could be mounted to the outer face of the pivot bushing 42, and the pivot bushing 42 could be rotatably connected to the sensor mount/housing 46 in the manner described above for the carrier bushing 44. The axial play could be provided by allowing the pivot shaft 18 to move axially within the pivot bushing 42, thus avoiding axial displacement between the first and second elements 26, 28. The same can likewise be done with the corresponding components on the right side of the assembly. Thus, the disclosed embodiment is not the only approach for mounting the second element 28 and the fourth element 32 to its respective pivotal shaft 18 in a relatively axially movable and pivotally fixed manner, and any technique may be used.

The pedal assembly 10 is connected to the controller 40 which is also part of the functional system (e.g., braking system). The controller 40 is designed to work with the other elements to convert a driver's input (force) into an action (e.g., braking action) for a vehicle. The pedal arm 12 provides a mechanical input as it is depressed, as generally known in the art. The movement of the pedal arm 12 is detected by the sensing system, i.e., the sensor assemblies 22 and 24, whose signals are sent to the controller 40 (converted into electrical input to the controller or Electronic Control Unit (ECU)). This input or feedback is combined or aggregated, as described below, to indicate a position and force applied to the pedal arm 12 via the pedal plate 14. Such information may be used by the controller for adaptive braking features, for example.

In embodiments, each of the elements or sensors 26, 30 may be layered with two circuits and separate inputs, as depicted in FIGS. 17-18. The output from the sensor assemblies 22, 24 may include four travel signals and one wake up function, in an embodiment. Such inputs and outputs may be customized based on a customer's input and desires. Generally, as noted below, SENT signal(s) may be provided to vehicle aggregators/MCU and ECU.

For example, as shown in FIG. 17, according to embodiments, the inductance sensor 26 (first element) may be associated with two circuits on the PCB 48, e.g., circuit #1 and circuit #2. Similarly, the Hall effect sensor 30 (third element) may be associated with two circuits on the PCB 64, e.g., circuit #3 and circuit #4. A wake up function may be associated with the Hall Effect sensor 30, according to an embodiment, as shown in FIG. 17 as well. The output signals from each of the circuits #1 to #4 may be sent to an MCU/aggregator unit 80. In an embodiment, the aggregator unit 80 may include a number of dedicated aggregators therein to assemble and deliver / output information as input to the controller 40 (ECU). In one embodiment, three aggregators - aggregator 1 (A1), aggregator 2 (A2) and aggregator 3 (A3) are provided as part of aggregator unit 80. In this case, then, each aggregator A1-A3 may be designated for receiving input from the associated circuits of the sensor assemblies 22 and 24. For example, an output signal from the inductance circuit #1 of the first sensor assembly 22 may be sent to aggregator A1. Similarly, an output signal from the Hall effect circuit #4 of the sensor assembly 24 may be sent to aggregator A3. Signals from the inductance circuit #2, the Hall Effect sensor wake up, and the Hall Effect circuit #3 may be sent to aggregator A2. Accordingly, the aggregator unit 80 may utilize received signals and information to send data to the controller 40.

FIG. 18 illustrates an exemplary circuit diagram including the features shown in FIG. 17, in accordance with an embodiment of this disclosure, as well as an external interface including power supply (e.g., 5V supply) and 12V ping, for example. The power supply is connected to the Inductor Module / PCB 48 and Hall Effect Module / PCB 64 to provide power thereto. Each module includes a 6 pin connector, for example. As illustrated, sensors 1, 2, and 3 communicate (send/receive signals) with the connectors, and sensor4 communicates (send/receives signals) via a 3 pin ground connector. Signals are sent from the connectors to at least one of the aggregators - aggregator 1 (A1), aggregator 2 (A2) and aggregator 3 (A3) - of aggregator unit 80 for inputting to the brake controller 40.

According to a non-limiting embodiment, the first sensor mount may have inductance features that include, but are not limited to, two layered coils, two Individual circuits to achieve redundancy requirement, and two Signal SENT outputs. In a non-limiting embodiment, the second sensor mount may have Hall Effect features that include, but are not limited to a 3D Position Sensor, with vertical and horizontal Hall plates, an array of Hall plates, including H plates provide 360°angular range, measuring deltas in opposite Z plates, a two pole magnet, two individual circuits to achieve redundancy requirement, and two Signal SENT outputs, and one wake up function. Accordingly, the sensor system may provide, according to embodiments herein, a sensor safety redundancy design that accommodates build tolerance and pedal lateral movement during operation/loading. This configuration also allows for more accurate and reliable measurements, as the readings from the different sensor assemblies can be compared and validated.

As such, it is understood herein that it is an aspect of this disclosure to provide a pedal assembly that activates a functional system of a vehicle. The pedal assembly includes: a pedal arm with a first end and a second end and configured for movement between a first arm position and a second arm position; a pedal plate provided on the second end of the pedal arm for depression by a foot of a driver; a vehicle mounting bracket; and a pair of pivotal shafts extending laterally from the first end of the pedal arm for pivotally mounting the pedal arm to the vehicle mounting bracket, such that movement of the pedal arm between the first arm position and the second arm position causes pivotal movement of the pair of pivotal shafts about a pivot axis. Also included in the pedal assembly is a sensing system having a first sensor assembly and a second sensor assembly for sensing a displacement of the pedal arm. The first sensor assembly is provided on a first side of the pedal assembly and the second sensor assembly is provided on a second side of the pedal assembly.

The first sensor assembly has a first element spaced apart from a second element in an axial direction of the pivot axis. The second element is movable with the pivotal movement of the pair of pivotal shafts as a result of the movement of the pedal arm from the first arm position such that the second element is displaced relative to the first element, and the first sensor assembly is configured to sense the displacement of the pedal arm based on the displacement of the second element relative to the first element. The first sensor assembly includes a first sensor mount with the first element fixedly mounted thereto, and the second element is pivotally connected to the first sensor mount to maintain an essentially constant spacing between the first and second elements in the axial direction. The second sensor assembly has a third element spaced apart from a fourth element in the axial direction of the pivot axis. The fourth element is movable with the pivotal movement of the pair of pivotal shafts as a result of the movement of the pedal arm from the first arm position such that the fourth element is displaced relative to the third element, and the second sensor assembly is configured to sense the displacement of the pedal arm based on the displacement of the fourth element relative to the third element. The second sensor assembly includes a second sensor mount with the third element fixedly mounted thereto, and the fourth element is pivotally connected to the second sensor mount to maintain an essentially constant spacing between the third and fourth elements in the axial direction. Each of the second element and the fourth element is connected to its respective pivotal shaft in an axially movable and pivotally fixed manner such that (a) each of the second and fourth elements pivots in concert with its respective pivotal shaft and (b) relative axial movement is permitted between each of the second and fourth elements and its respective pivotal shaft.

Another aspect provides a sensing system for sensing displacement of a pedal arm for a functional system of a vehicle, the pedal arm being configured for movement between a first arm position and a second arm position and associated with pivotal shafts for pivotal movement about a pivot axis. The sensing system includes: a first sensor assembly and a second sensor assembly for sensing a displacement of the pedal arm. The first sensor assembly is configured for mounting relative to a first side of the pedal arm, and the second sensor assembly is configured for mounting relative to a second side of the pedal arm. The first sensor assembly has a first element spaced apart from a second element in an axial direction of the pivot axis. The second element is configured to be connected to one of the pivotal shafts for pivotal movement therewith as a result of the movement of the pedal arm from the first arm position such that the second element is displaced relative to the first element, and the first sensor assembly is configured to sense the displacement of the pedal arm based on the displacement of the second element relative to the first element. The first sensor assembly includes a first sensor mount with the first element fixedly mounted thereto, and the second element is pivotally connected to the first sensor mount. The second element is configured to be mounted to one of the pivotal shafts in an axially movable and pivotally fixed manner to pivot in concert with the one of the pivotal shafts and permit axial movement thereof to maintain an essentially constant spacing between the first and second elements in the axial direction. The second sensor assembly has a third element spaced apart from a fourth element in the axial direction of the pivot axis. The fourth element is configured to be connected to the other of the pivotal shafts for pivotal movement therewith as a result of the movement of the pedal arm from the first arm position such that the fourth element is displaced relative to the third element, and the second sensor assembly is configured to sense the displacement of the pedal arm based on the displacement of the fourth element relative to the third element. The second sensor assembly includes a second sensor mount with the third element fixedly mounted thereto, the fourth element being pivotally connected to the second sensor mount, and the fourth element being configured to be mounted to said other of the pivotal shafts in an axially movable and pivotally fixed manner to pivot in concert with the other of the pivotal shafts and permit axial movement thereof to maintain an essentially constant spacing between the third and fourth elements in the axial direction.

Yet another aspect provides a vehicle comprising the pedal assembly noted previously above and a controller for implementing braking force and configured to receive readings from said first sensor assembly and said second sensor assembly.

Still yet another aspect provides a method of making the pedal assembly, that activates a functional system of a vehicle, the method including: providing the first sensor assembly and the second sensor assembly. The providing includes: assembling a printed circuit board in the first sensor mount and the second sensor mount for each of the first sensor assembly and the second sensor assembly, the first element and the third element being fixed to the respective printed circuit boards; mounting said second element to a first carrier bushing and the fourth element to a second carrier bushing, and wherein each of said first and second carrier bushings are configured for alignment with and mounting to the pair of pivotal shafts so as to provide said pivoting in concert with the pair of pivotal shafts; and assembling the first carrier bushing and the second carrier bushing to the respective first sensor mount and the second sensor mount. The method of making the pedal assembly also includes aligning and mounting the first carrier bushing and the second carrier bushing of the first sensor assembly and second sensor assembly to the pair of pivotal shafts so as to provide said pivoting in concert with the one or more pivotal shafts, thereby mounting the first sensor assembly and the second sensor assembly to the vehicle mounting bracket.

While the principles of the disclosure have been made clear in the illustrative embodiments set forth above, it will be apparent to those skilled in the art that various modifications may be made to the structure, arrangement, proportion, elements, materials, and components used in the practice of the disclosure.

It will thus be seen that the features of this disclosure have been fully and effectively accomplished. It will be realized, however, that the foregoing preferred specific embodiments have been shown and described for the purpose of illustrating the functional and structural principles of this disclosure and are subject to change without departure from such principles. Therefore, this disclosure includes all modifications encompassed within the spirit and scope of the following claims.

## Claims

1. A pedal assembly that activates a functional system of a vehicle, the pedal assembly comprising:
a pedal arm with a first end and a second end and configured for movement between a first arm position and a second arm position;
a pedal plate provided on the second end of the pedal arm for depression by a foot of a driver;
a vehicle mounting bracket;
a pair of pivotal shafts extending laterally from the first end of the pedal arm for pivotally mounting the pedal arm to the vehicle mounting bracket, such that movement of the pedal arm between the first arm position and the second arm position causes pivotal movement of the pair of pivotal shafts about a pivot axis;
a sensing system comprising a first sensor assembly and a second sensor assembly for sensing a displacement of the pedal arm;
the first sensor assembly being provided on a first side of the pedal assembly;
the second sensor assembly being provided on a second side of the pedal assembly;
the first sensor assembly comprising a first element spaced apart from a second element in an axial direction of the pivot axis, the second element being movable with the pivotal movement of the pair of pivotal shafts as a result of the movement of the pedal arm from the first arm position such that the second element is displaced relative to the first element, wherein the first sensor assembly is configured to sense the displacement of the pedal arm based on the displacement of the second element relative to the first element;
the first sensor assembly including a first sensor mount with the first element fixedly mounted thereto, the second element being pivotally connected to the first sensor mount to maintain an essentially constant spacing between the first and second elements in the axial direction;
the second sensor assembly comprising a third element spaced apart from a fourth element in the axial direction of the pivot axis, the fourth element being movable with the pivotal movement of the pair of pivotal shafts as a result of the movement of the pedal arm from the first arm position such that the fourth element is displaced relative to the third element, wherein the second sensor assembly is configured to sense the displacement of the pedal arm based on the displacement of the fourth element relative to the third element;
the second sensor assembly including a second sensor mount with the third element fixedly mounted thereto, the fourth element being pivotally connected to the second sensor mount to maintain an essentially constant spacing between the third and fourth elements in the axial direction; and
wherein each of the second element and the fourth element is connected to its respective pivotal shaft in an axially movable and pivotally fixed manner such that (a) each of the second and fourth elements pivots in concert with its respective pivotal shaft and (b) relative axial movement is permitted between each of the second and fourth elements and its respective pivot shaft.

2. The pedal assembly according to claim 1, wherein the functional system of the vehicle is a brake system.

3. The pedal assembly according to claim 2, wherein the pedal arm is a brake pedal arm for operating a brake element of the vehicle.

4. The pedal assembly according to claim 1, wherein the pair of pivotal shafts are outer ends of a singular pivot rod or tube.

5. The pedal assembly according to claim 1, wherein the first element is an inductance sensor, the second element is an inductance target, the third element is a Hall effect sensor, and the fourth element is a magnet.

6. The pedal assembly according to claim 1, wherein the first sensor assembly comprises a first carrier bushing and the second sensor assembly comprises a second carrier bushing, said second element being mounted to the first carrier bushing and the fourth element being mounted to the second carrier bushing, and wherein each of said first and second carrier bushings are configured for alignment with and mounting to the pivotal shafts so as to provide said pivoting in concert with the respective pivotal shaft.

7. The pedal assembly according to claim 6, wherein each of the first sensor mount and the second sensor mount include a receptacle therein for receiving, respectively, at least a portion of the first carrier bushing and the second carrier bushing for pivotal connection of the second element and the fourth element thereto.

8. The pedal assembly according to claim 7, wherein each receptacle includes a locking tab, wherein each of the first carrier bushing and the second carrier bushing include a receiving portion or indentation thereon, and wherein, upon assembly of the first carrier bushing and the second carrier bushing to their respective receptacles in the first sensor mount and the second sensor mount, the locking tabs are configured for insertion into the receiving portions or indentations to axially secure the first carrier bushing and the second carrier bushing to the first sensor mount and the second sensor mount, respectively.

9. The pedal assembly according to claim 6, wherein each of the first carrier bushing and the second carrier bushing comprise a mounting peg extending therefrom, the peg being configured for insertion into an opening or a through-hole of the pivotal shafts for mounting thereto.

10. The pedal assembly according to claim 1, wherein each of the first sensor mount and the second sensor mount include a printed circuit board therein, said first element and third element being fixedly mounted to the respective printed circuit boards.

11. The pedal assembly according to claim 1, wherein the pedal arm comprises an elongated lever structure.

12. A sensing system for sensing displacement of a pedal arm for a functional system of a vehicle, the pedal arm being configured for movement between a first arm position and a second arm position and associated with pivotal shafts for pivotal movement about a pivot axis, the sensing system comprising:
a first sensor assembly and a second sensor assembly for sensing a displacement of the pedal arm;
the first sensor assembly configured for mounting relative to a first side of the pedal arm;
the second sensor assembly configured for mounting relative to a second side of the pedal arm;
the first sensor assembly comprising a first element spaced apart from a second element in an axial direction of the pivot axis, the second element being configured to be connected to one of the pivotal shafts for pivotal movement therewith as a result of the movement of the pedal arm from the first arm position such that the second element is displaced relative to the first element, wherein the first sensor assembly is configured to sense the displacement of the pedal arm based on the displacement of the second element relative to the first element;
the first sensor assembly including a first sensor mount with the first element fixedly mounted thereto, the second element being pivotally connected to the first sensor mount, and the second element being configured to be mounted to said one of the pivotal shafts in an axially movable and pivotally fixed manner to pivot in concert with the one of the pivotal shafts and permit axial movement thereof to maintain an essentially constant spacing between the first and second elements in the axial direction;
the second sensor assembly comprising a third element spaced apart from a fourth element in the axial direction of the pivot axis, the fourth element being configured to be connected to the other of the pivotal shafts for pivotal movement therewith as a result of the movement of the pedal arm from the first arm position such that the fourth element is displaced relative to the third element, wherein the second sensor assembly is configured to sense the displacement of the pedal arm based on the displacement of the fourth element relative to the third element;
the second sensor assembly including a second sensor mount with the third element fixedly mounted thereto, the fourth element being pivotally connected to the second sensor mount, and the fourth element being configured to be mounted to said other of the pivotal shafts in an axially movable and pivotally fixed manner to pivot in concert with the other of the pivotal shafts and permit relative axial movement thereof to maintain an essentially constant spacing between the third and fourth elements in the axial direction.

13. The sensing system according to claim 12, wherein the first element is an inductance sensor, the second element is an inductance target, the third element is a Hall effect sensor, and the fourth element is a magnet.

14. The sensing system according to claim 12, wherein the first sensor assembly comprises a first carrier bushing and the second sensor assembly comprises a second carrier bushing, said second element being mounted to the first carrier bushing and the fourth element being mounted to the second carrier bushing, and wherein each of said first and second carrier bushings are configured for alignment with and mounting to the pivotal shafts so as to provide said pivoting in concert with the pivotal shafts.

15. The sensing system according to claim 14, wherein each of the first sensor mount and the second sensor mount include a receptacle therein for receiving, respectively, at least a portion of the first carrier bushing and the second carrier bushing for pivotal connection of the second element and the fourth element thereto.

16. The sensing system according to claim 15, wherein each receptacle includes a locking tab, wherein each of the first carrier bushing and the second carrier bushing include a receiving portion or indentation thereon, and wherein, upon assembly of the first carrier bushing and the second carrier bushing to their respective receptacles in the first sensor mount and the second sensor mount, the locking tabs are configured for insertion into the receiving portions or indentations to axially secure the first carrier bushing and the second carrier bushing to the first sensor mount and the second sensor mount, respectively.

17. The sensing system according to claim 15, wherein each of the first carrier bushing and the second carrier bushing comprise a mounting peg extending therefrom, the mounting peg being configured for insertion into an opening or a through-hole of the pivotal shafts for mounting thereto.

18. The sensing system according to claim 12, wherein each of the first sensor mount and the second sensor mount include a printed circuit board therein, said first element and third element being fixedly mounted to the respective printed circuit boards.

19. A vehicle comprising the pedal assembly according to claim 1 and a controller for implementing braking force and configured to receive readings from said first sensor assembly and said second sensor assembly.

20. A method of making the pedal assembly according to claim 1 that activates a functional system of a vehicle, the method comprising:
providing the first sensor assembly and the second sensor assembly, wherein said providing comprises:
assembling a printed circuit board in the first sensor mount and the second sensor mount for each of the first sensor assembly and the second sensor assembly, the first element and the third element being fixed to the respective printed circuit boards;
mounting said second element to a first carrier bushing and the fourth element to a second carrier bushing, and wherein each of said first and second carrier bushings are configured for alignment with and mounting to the pair of pivotal shafts so as to provide said pivoting in concert with the pair of pivotal shafts;
assembling the first carrier bushing and the second carrier bushing to the respective first sensor mount and the second sensor mount;
and
aligning and mounting the first carrier bushing and the second carrier bushing of the first sensor assembly and second sensor assembly to the pair of pivotal shafts so as to provide said pivoting in concert with the pair of pivotal shafts, thereby mounting the first sensor assembly and the second sensor assembly to the vehicle mounting bracket.
